(19) Europäisches Patentamt / European Patent Office / Office européen des brevets

(11) **EP 3 578 926 B1**

(12) **FASCICULE DE BREVET EUROPEEN**

(45) Date de publication et mention de la délivrance du brevet:
**06.07.2022 Bulletin 2022/27**

(21) Numéro de dépôt: **19178682.1**

(22) Date de dépôt: **06.06.2019**

(51) Classification Internationale des Brevets (IPC):
**G01C 23/00** *(2006.01)*   **G08G 5/00** *(2006.01)*
**G08G 5/02** *(2006.01)*   **G02B 27/01** *(2006.01)*

(52) Classification Coopérative des Brevets (CPC):
**G01C 23/005; G02B 27/01; G08G 5/0026; G08G 5/025;** G02B 2027/014; G08G 5/0086

(54) **PROCÉDÉ DE SÉCURISATION DU FONCTIONNEMENT D'UN SYSTÈME DE VISION SYNTHÉTIQUE D'UN AÉRONEF, PRODUIT PROGRAMME D'ORDINATEUR ET SYSTÈME ASSOCIÉS**

SICHERUNGSVERFAHREN ZUR VERARBEITUNG EINES SYNTHETISCHEN FLUGZEUG-VISIONSSYSTEMS, ZUGEHÖRIGES SYSTEM UND COMPUTERPROGRAMMPRODUKT

SECURING METHOD OF PROCESSING OF AN AIRCRAFT SYNTHETIC VISION SYSTEM, ASSOCIATED SYSTEM AND COMPUTER PROGRAM PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2018 FR 1800571**

(43) Date de publication de la demande:
**11.12.2019 Bulletin 2019/50**

(73) Titulaire: **Thales**
**92400 Courbevoie (FR)**

(72) Inventeurs:
• **GANILLE, Thierry**
  **33700 MERIGNAC (FR)**
• **MONVOISIN, Emmanuel**
  **33700 MERIGNAC (FR)**
• **FINE, Alexandre**
  **33700 MERIGNAC (FR)**
• **MARIANI, Pierre**
  **33700 MERIGNAC (FR)**
• **MISSON, Hélène**
  **33700 MERIGNAC (FR)**

(74) Mandataire: **Lavoix**
**2, place d'Estienne d'Orves**
**75441 Paris Cedex 09 (FR)**

(56) Documents cités:
WO-A1-2018/009109    FR-A1- 3 033 903
US-A1- 2018 024 237    US-B1- 8 917 191
US-B1- 9 733 349

**Description**

La présente invention concerne un procédé de sécurisation du fonctionnement d'un système de vision synthétique d'un aéronef.

La présente invention concerne également un produit programme d'ordinateur et un système associés.

Plus particulièrement, l'invention se situe dans le domaine technique d'Interactions Humain Système (connu sous l'acronyme IHS) de pilotage d'un aéronef comportant une représentation synthétique de l'environnent extérieur. Une telle représentation est connue sous l'acronyme anglais SVS (« Synthetic Vision System ») et peut être affichée sur un afficheur tête basse ou tête haute, porté ou non.

Les écrans primaires de pilotage des aéronefs, connus sous l'acronyme anglais PFD (« Primary Flight Display »), récents ou en cours de développement, proposent déjà pour la plupart d'entre eux une nouvelle fonctionnalité consistant à afficher une telle représentation synthétique SVS.

En particulier, une représentation synthétique SVS permet de présenter au pilote une vue tridimensionnelle égocentrique de l'environnement extérieur de l'aéronef sous la forme d'une image synthétique, généralement affichée sous la symbologie classique du pilotage. Une telle vue, dite vue SVS, est générée à partir de la position de l'aéronef (notamment longitude, latitude et altitude), de son attitude (tangage, roulis et lacet) et d'une base de données contenant un échantillonnage des altitudes du terrain ainsi que d'autres éléments tels que des obstacles, pistes d'atterrissage, hydrographie, villes, routes, etc.

Une telle représentation synthétique SVS est par exemple décrite dans le document WO 2018/009109 A1 ou dans le document US 9 733 349 B1.

Le document FR 3 033 903 A1 concerne un système d'aide à la navigation d'un aéronef, comportant un afficheur tête haute destiné à superposer à un paysage extérieur une image synthétique de celui-ci. Le paysage extérieur comporte une zone d'intérêt d'un aéroport, par exemple une piste d'atterrissage. L'image synthétique est déterminée en fonction de données relatives à ladite zone d'intérêt et de coordonnées de l'aéronef.

Toutefois, il a été démontré en utilisant notamment des simulateurs de vol qu'un affichage erroné d'une vue SVS, spécialement sur un écran PFD, peut avoir des conséquences critiques sur le vol. Un tel affichage peut être notamment obtenu en introduisant une erreur sur un des paramètres de position ou d'attitude de l'aéronef.

Ainsi, par exemple, une dérive lente du cap de l'aéronef lors d'un vol dans une vallée peut placer une montagne sur une vue SVS au milieu de la vallée réelle et pousser un pilote à une manoeuvre d'évitement par rapport à la vue SVS qui le conduit face à une montagne réelle.

Selon un autre exemple, une donnée erronée sur la radio-altitude de l'aéronef peut provoquer une montée brutale du terrain sur la vue SVS. Cela peut provoquer à son tour une réaction du pilote d'un cabré excessif ce qui met en danger la sécurité du vol.

On conçoit alors qu'il existe un besoin de sécuriser la fonctionnalité des systèmes de vision synthétique SVS.

La présente invention a pour but de sécuriser la fonctionnalité d'un système de vision synthétique SVS d'un aéronef pour lui associer un niveau de sureté répondant au besoin critique. L'invention permet ainsi de garantir qu'une défaillance d'un système de vision synthétique SVS ne produira pas une vue SVS erronée qui est susceptible d'induire une réaction du pilote potentiellement dangereuse.

À cet effet, l'invention a pour objet un procédé de sécurisation conforme à la revendication 1.

Suivant d'autres aspects avantageux de l'invention, le procédé comprend une ou plusieurs des caractéristiques des revendications dépendantes de procédé.

L'invention a également pour objet un produit programme d'ordinateur comportant des instructions logicielles qui, lorsque mises en oeuvre par un équipement informatique, mettent en oeuvre le procédé tel que défini précédemment.

L'invention a également pour objet un système de sécurisation du fonctionnement d'un système de vision synthétique d'un aéronef, comprenant des moyens techniques configurés pour mettre en oeuvre le procédé tel que défini précédemment.

Ces caractéristiques et avantages de l'invention apparaitront à la lecture de la description qui va suivre, donnée uniquement à titre d'exemple non limitatif, et faite en référence aux dessins annexés, sur lesquels :

- la figure 1 est une vue schématique d'un système de sécurisation du fonctionnement d'un système de vision synthétique d'un aéronef, selon l'invention ;
- la figure 2 est un organigramme d'un procédé de sécurisation selon l'invention, le procédé étant mis en oeuvre par le système de sécurisation de la figure 1 ; et
- les figures 3 à 5 sont des vues schématiques illustrant la mise en oeuvre d'une étape du procédé de la figure 2.

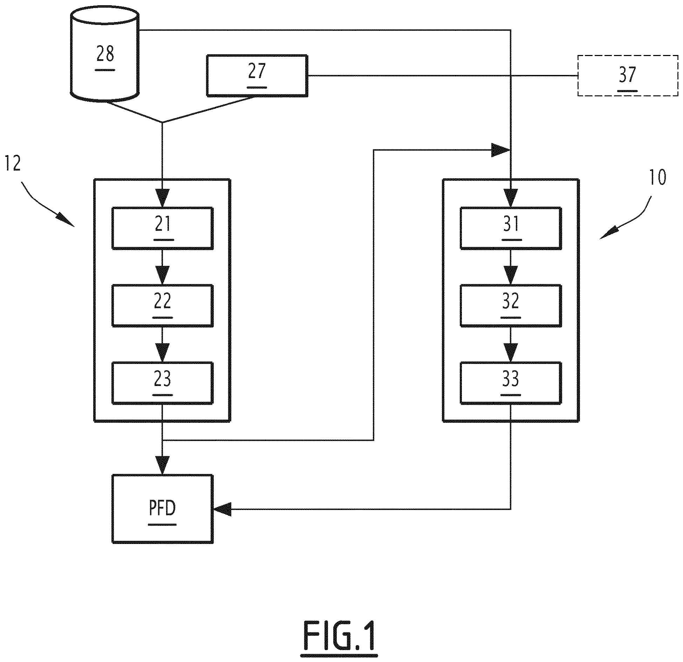

La figure 1 illustre en effet un système de sécurisation 10 du fonctionnement d'un système de vision synthétique 12 d'un aéronef, selon l'invention.

On entend par aéronef, tout engin volant dans l'atmosphère terrestre et notamment un avion, un hélicoptère ou un drone. L'aéronef est pilotable par au moins un pilote directement à partir du cockpit de celui-ci (cas d'un avion ou d'un hélicoptère) ou bien à distance, à partir par exemple d'un centre de contrôle terrestre (cas d'un drone ou de tout autre engin pilotable à distance).

Dans l'exemple de réalisation décrit ci-dessous, l'aéronef est un avion.

Le système de vision synthétique 12, connu également sous l'acronyme anglais SVS, permet de présenter au pilote de l'aéronef une vue tridimensionnelle de l'environnement extérieur de l'aéronef. Dans l'exemple décrit, le système de vision synthétique 12 est embarqué dans l'aéronef.

Plus particulièrement, le système de vision synthétique 12 est apte à fournir un affichage synthétique de l'environnement extérieur de l'aéronef selon un champ de vue prédéterminé. Ce champ de vue correspond par exemple à celui du pilote. À titre d'exemple, ce champ de vue est formé par une ouverture horizontale de 60° et une ouverture verticale de 50°.

Pour ce faire, en référence à la figure 1, le système de vision synthétique 12 comprend un module d'acquisition 21, un module de traitement 22 et un module de sortie 23.

Le module d'acquisition 21 est connecté à des premiers détecteurs 27 de l'aéronef et à une base de données 28.

Les premiers détecteurs 27 sont aptes à fournir au module d'acquisition 21 des premières mesures relatives à la position courante et à l'attitude de l'aéronef. Ces premiers détecteurs 27 sont connus en soi et présentent par exemple un capteur des signaux issus d'un ou de plusieurs systèmes de positionnement par satellites et une centrale inertielle.

La base de données 28 est apte à fournir au module d'acquisition 21 des informations relatives à des altitudes du terrain survolé par l'aéronef ainsi que des informations relatives à d'autres éléments présents à proximité tels que des obstacles, pistes d'atterrissage, hydrographie, villes, routes, etc.

Le module de traitement 22 est apte à analyser l'ensemble des données acquises par le module d'acquisition 21 pour générer un affichage synthétique tridimensionnel en utilisant des premières règles de projection générées en fonction de ces données.

Ces premières règles de projection se présentent par exemple sous la forme d'une matrice de projection de l'environnement extérieur sur une surface.

Le module de sortie 23 est apte à transmettre l'affichage généré par le module de traitement 22 à un écran externe pour l'afficher sur celui-ci.

L'écran externe est avantageusement un écran primaire de pilotage connu sous l'acronyme anglais PFD (« Primary Flight Display »). Cet écran est par exemple de tête basse ou de tête haute.

Tout comme le système de vision synthétique 12, le système de sécurisation 10 selon l'invention comprend un module d'acquisition 31, un module de traitement 32 et un module de sortie 33.

Le système de sécurisation 10 se présente par exemple au moins partiellement sous la forme d'un calculateur embarqué comportant une mémoire et un processeur aptes à mettre en oeuvre le fonctionnement des modules 31 à 33. Dans ce cas, les modules 31 à 33 se présentent au moins partiellement sous la forme de logiciels.

Selon un autre exemple de réalisation, au moins certains des modules 31 à 33 présentent des composants physiques comme par exemple des circuits logiques programmables par exemple de type FPGA (« Field-Programmable Gate Array ») configurés pour mettre en oeuvre le fonctionnement de ces modules.

Le module d'acquisition 31 est apte à acquérir des données issues de la base de données 28 et des deuxièmes mesures relatives à la position courante et à l'attitude de l'aéronef.

Selon un exemple de réalisation de l'invention, les deuxièmes mesures sont fournies par les premiers détecteurs 27.

Selon un autre exemple de réalisation, les deuxièmes mesures sont fournies par des deuxièmes détecteurs 37 qui sont distincts des premiers détecteurs 27. En particulier, dans ce cas, les deuxièmes détecteurs 37 sont des détecteurs différents des premiers détecteurs 27 et sont donc indépendants de ceux-ci. Comme dans le cas précédent, les deuxièmes détecteurs 37 présentent par exemple un capteur des signaux issus d'un ou de plusieurs systèmes de positionnement par satellites et une centrale inertielle.

Le module d'acquisition 31 est apte à acquérir en outre des éléments spécifiques au contrôle de l'affichage généré par le système de vision synthétique 12.

Le module de traitement 32 est apte à traiter l'ensemble des données acquises par le module d'acquisition 31 pour mettre en œuvre au moins certaines étapes du procédé de sécurisation selon l'invention, expliqué plus en détail par la suite.

Le module de sortie 33 est connecté notamment à l'écran PFD pour modifier dans certains cas l'affichage du système de vision synthétique 12, comme cela sera expliqué par la suite.

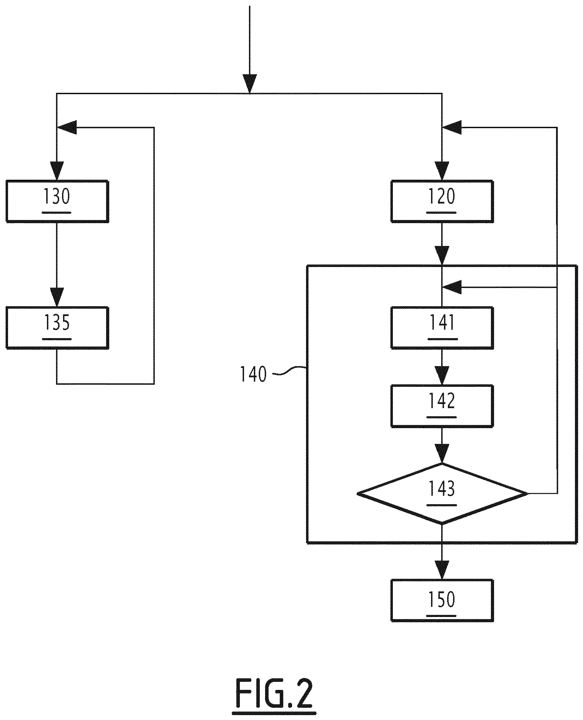

Le procédé de sécurisation du fonctionnement du système de vision synthétique 12 sera désormais expliqué en référence à la figure 2 présentant un organigramme de ses étapes.

Comme cela sera expliqué par la suite, ce procédé comprend des étapes 120, 140 et 150 mises en oeuvre par le module de traitement 32 du système de sécurisation 10 et des étapes 130 et 135 mises en oeuvre par le module de traitement 22 du système de vision synthétique 12.

Initialement, l'aéronef est en vol et le système de vision synthétique 12 fournit un affichage à chaque instant à l'écran PFD au fur et à mesure du déplacement de l'aéronef et de la modification de sa position et de son attitude.

Le fonctionnement du système de sécurisation 10 est par exemple activé simultanément avec le fonctionnement du système de vision synthétique 12. Les étapes du procédé décrites ci-dessous sont alors exécutées de manière itérative à chaque mise à jour des positions et/ou de l'attitude de l'aéronef.

Lors de l'étape 120 du procédé, le module de traitement 32 du système de sécurisation 10 détermine au moins un objet de contrôle dans le champ de vue du système de vision synthétique 12.

Cette étape 120 sera décrite par la suite en relation avec un seul objet de contrôle, la détermination des autres objets de contrôle s'effectuant de la même manière. Bien entendu, en pratique, une pluralité d'objets de contrôle est déterminée. Ces objets de contrôle sont par exemple de types et de natures différents.

En particulier, l'objet de contrôle présente un point ou un objet tridimensionnel orienté dans l'espace et de taille et/ou de forme connue(s).

Selon un exemple de réalisation, l'objet de contrôle présente un objet fictif, c'est-à-dire un objet non-présent dans la base de données 28 et de manière générale, un objet défini dans le repère terrestre mais non-présent dans l'environnement extérieur de l'aéronef.

Selon un autre exemple de réalisation de l'invention, l'objet de contrôle présente un objet réel dans l'environnement extérieur de l'aéronef qui est déjà par exemple présent sur l'affichage du système de vision synthétique 12. Dans ce cas, il s'agit d'un objet issu de la base de données 28 qui peut être donc une partie de terrain, une piste d'atterrissage, un obstacle, etc.

De plus, selon un exemple de réalisation, l'objet de contrôle présente une position fixe dans un repère terrestre et lorsqu'il s'agit d'un objet tridimensionnel, une orientation fixe dans ce repère.

Ainsi, selon un exemple de réalisation, lors d'une phase d'approche de l'aéronef vers un aéroport et en deçà d'une certaine distance au seuil de la piste d'atterrissage, la piste d'atterrissage sélectionnée par le pilote est choisie par le module de traitement 32 en tant qu'un objet de contrôle. Cet exemple de réalisation est particulièrement avantageux car le rôle de la piste d'atterrissage dans le système de vision synthétique 12 est particulièrement important lors des approches. Ainsi, la sécurisation du fonctionnement de ce système par objet de contrôle sûr tel qu'une piste d'atterrissage est particulièrement intéressante.

Le module de traitement 32 est configuré pour déterminer au moins un objet de contrôle à tout instant dans le champ de vue du système de vision synthétique 12.

Pour ce faire, le module de traitement 32 met en oeuvre par exemple la technique décrite ci-après.

Cette technique consiste en particulier à définir un maillage en trois dimensions de l'espace autour de la Terre à partir d'un pas de latitude *LatStep,* d'un pas de longitude *LongStep* et d'un pas d'altitude *AltStep*. Puis, la position courante de l'aéronef est projetée d'une distance *ProjDist* exprimée en miles nautiques vers l'avant le long de l'axe longitudinal de l'aéronef pour le calcul d'un point P, dont la latitude *Latitude(P),* la longitude *Longitude(P)* et l'altitude *Altitude(P)* sont définies par les relations suivantes :

$$Latitude(P) = Latitude(AC) + \left( \frac{ProjDist \times \cos\big(Cap(AC)\big) \times \cos(Assiette(AC))}{60} \right);$$

$$Longitude(P) = Longitude(AC)$$
$$+ \left( \frac{ProjDist \times \sin\big(Cap(AC)\big) \times \cos(Assiette(AC)) \times \cos(Latitude(AC))}{60} \right);$$

$$Altitude(P) = Altitude(AC) + NMtoFeet(ProjDist) \times \sin(Assiette(AC));$$

où *Cap(AC)* et *Assiette(AC)* sont respectivement le cap et l'assiette de l'aéronef et *NMtoFeet(ProjDist)* est la distance *ProjDist* exprimée en pieds.

Le point P ainsi obtenu se situe à l'intérieur d'un seul et unique parallélépipède rectangle du maillage en trois dimensions. De plus, compte tenu de son calcul, ce point est toujours dans le champ de vue du pilote et donc du système de vision synthétique.

L'objet de contrôle est par exemple déterminé en utilisant des points fixes du parallélépipède rectangle dans lequel le point P se trouve, comme par exemple au moins certains des huit coins C1 à C8 de ce parallélépipède. Ainsi, par exemple, la latitude *Latitude(C1),* la longitude *Longitude(C1)* et l'altitude *Altitude(C1)* du coin C1 sont déterminées

en utilisant les relations suivantes :

$$Latitude(C1) = \left[\frac{Latitude(P)}{LatStep}\right] \times LatStep + LatStep;$$

$$Longitude(C1) = \left[\frac{Longitude(P)}{LongStep}\right] \times LongStep + LongStep;$$

$$Altitude(C1) = \left[\frac{Altitude(P)}{AltStep}\right] \times AltStep + AltStep;$$

où [...] désigne la partie entière.

Les autres points C2 à C8 sont déterminés de manière analogue. De plus, à titre d'exemple, *LatStep* = 0,1°, *LongStep* = 0,1° et *AltStep* = 1 000 *pieds.*

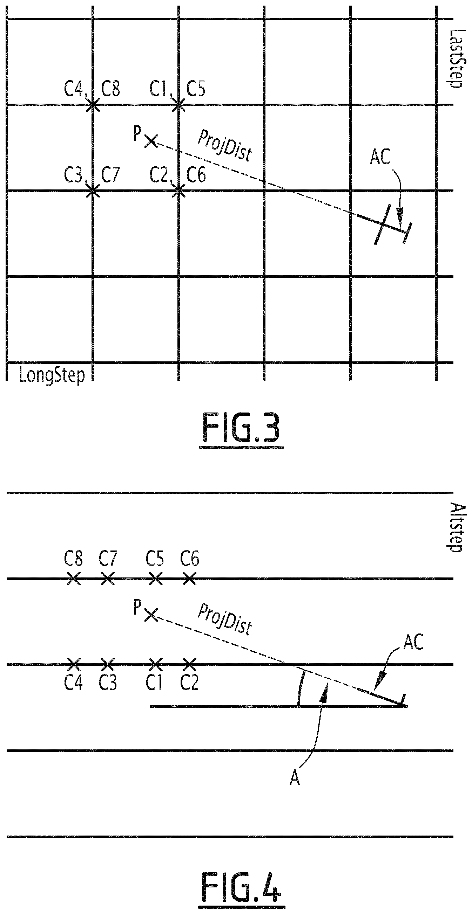

Cette technique est schématiquement illustrée sur les figures 3 et 4 sur lesquelles l'aéronef est désigné par la référence AC.

En particulier, la figure 3 illustre un schéma horizontal (vue de dessus) du maillage associé et la figure 4 illustre un schéma vertical (vue de côté) de ce maillage. Par ailleurs, la référence A sur la figure 4 désigne l'assiette de l'aéronef AC.

Bien entendu, d'autres techniques peuvent être appliquées pour déterminer l'objet de contrôle. Par ailleurs, différents objets de contrôle peuvent être définis en utilisant des techniques différentes.

En revenant à la description de l'étape 120, selon un autre exemple de réalisation, l'objet de contrôle présente une position définie par rapport à l'aéronef.

En effet, comme cela est connu en soi, le système de vision synthétique 12 est apte à tracer le terrain face à l'aéronef à l'intérieur d'un volume défini par le champ de vue mais aussi par deux plans perpendiculaires à l'axe longitudinal de l'aéronef à deux distances fixes. Le premier de ces plans est connu sous le terme anglais « near plane » (ou plan proximal en français) et le deuxième est connu sous le terme anglais « far plane » (ou plan distant en français). Ainsi, seul le terrain situé entre ces deux plans est tracé par le système de vision synthétique et un évènement redouté est une erreur de distance du plan proximal qui empêcherait le tracé d'un obstacle ou d'un relief proche face à l'aéronef.

Dans ce cas, l'objet de contrôle est défini par rapport au plan proximal par exemple à une distance fixe de ce plan vers l'avant selon l'axe longitudinale de l'aéronef.

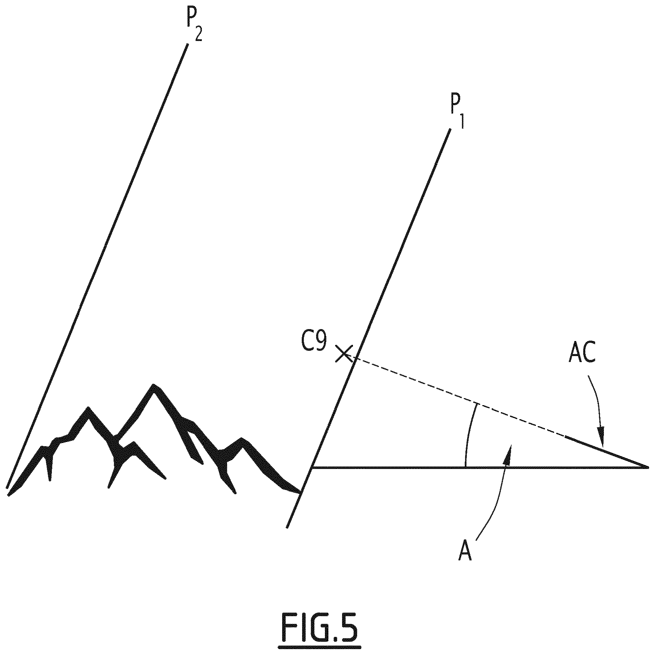

Ce cas est illustré schématiquement sur la figure 5 sur laquelle la référence $P_1$ désigne le plan proximal, la référence $P_2$ désigne le plan distal, la référence A désigne l'assiette de l'aéronef AC et la référence C9 désigne l'objet de contrôle choisi.

Selon encore un autre exemple de réalisation, lorsque notamment l'écran PFD est présenté sur un afficheur tête haute, le choix de l'objet de contrôle dépend en plus de la position de la tête du pilote. Ainsi, dans le premier exemple lorsque l'objet de contrôle est défini par rapport au point P, projeté de la position courante à une distance fixe de l'aéronef, il est possible de remplacer la projection de la position de l'aéronef selon son axe longitudinal par une projection selon la ligne de visée de l'équipement tête haute.

À la fin de l'étape 120, le module de traitement 32 détermine en outre pour chaque objet de contrôle au moins un point de contrôle.

Ainsi, par exemple, lorsque l'objet de contrôle est un point, ce même point est défini comme un point de contrôle. En revanche, lorsqu'il s'agit d'un objet de contrôle tridimensionnel, chaque point de contrôle est choisi comme un point appartenant à cet objet. Ainsi, dans la précédente description de la technique de détermination d'un objet de contrôle, au moins certains des points $C1$ à $C8$ peuvent être choisis comme points de contrôle.

Par ailleurs, lorsqu'une piste d'atterrissage est choisie comme un objet de contrôle, ses deux extrémités sont par exemple choisies en tant que points de contrôle.

Lors de l'étape 130 mise en oeuvre par le module de traitement 22 du système de vision synthétique 12 par exemple en parallèle avec l'étape 120, ce module de traitement 22 détermine également un ou plusieurs objets de contrôle et pour chacun d'entre eux, au moins un point de contrôle en utilisant le même mécanisme que celui utilisé par le module de traitement 32 du système de sécurisation 10.

Les objets de contrôle ainsi que les points de contrôle définis par les deux modules de traitement 22, 32 sont donc identiques.

Puis, lors de l'étape 135 suivante, le module de traitement 22 du système de vision synthétique 12 intègre un tracé de chaque objet de contrôle déterminé lors de l'étape 130 précédente dans son affichage.

Ces tracés sont déterminés en utilisant les premières règles de projection.

Selon un exemple de réalisation, le tracé de chaque objet de contrôle est au moins partiellement transparent sur l'affichage du système de vision synthétique 12 ou est repérable sur cet affichage par des symboles adaptés.

En complément, dans ce cas, le tracé de chaque objet de contrôle fictif est entièrement transparent sur l'affichage du système de vision synthétique 12. Les objets réels (comme par exemple la piste d'atterrissage) restent visibles.

Par ailleurs, lors de l'exécution des étapes du procédé suivantes, les objets de contrôle et les points de contrôle correspondants restent identifiables en tant que tels au moins par le module de traitement 22.

Lors de l'étape 140 mise en oeuvre par le module de traitement 32 du système de sécurisation 10 après les étapes 120 et 135, ce module de traitement 32 vérifie la cohérence de l'affichage du système de vision synthétique 12 en utilisant les points de contrôle déterminés lors de l'étape 120.

En particulier, cette étape 140 comprend trois sous-étapes suivantes, mises en oeuvre pour chaque point de contrôle.

Lors d'une première sous-étape 141, le module de traitement 32 du système de sécurisation 10 récupère une première position correspondant à la position affichée de ce point de contrôle sur le tracé de l'affichage du système de vision synthétique 12.

Lors d'une deuxième sous-étape 142, le module de traitement 32 du système de sécurisation 10 détermine une deuxième position du point de contrôle sur l'affichage du système de vision synthétique 12, en utilisant des deuxièmes règles de projection indépendantes des premières règles de projection du système de vision synthétique 12.

Ces deuxièmes règles de projection sont par exemple analogues aux premières règles de projection mais sont générées indépendamment de ces dernières.

En particulier, pour générer ces règles, le module de traitement 32 du système de sécurisation 10 utilise avantageusement les deuxièmes mesures relatives à la position courante et à l'attitude de l'aéronef. Comme expliqué précédemment, ces deuxièmes mesures sont issues des deuxièmes détecteurs 37 différents des premiers détecteurs 27.

Selon un autre exemple de réalisation, les deuxièmes règles de projection sont générées par le module de traitement 32 du système de sécurisation 10 à partir des premières mesures.

Lors d'une troisième sous-étape 143, le module de traitement 32 du système de sécurisation 10 compare les première et deuxième positions.

Lorsque lors de cette comparaison, le module de traitement 32 détermine que la deuxième position diffère de la première position significativement en comparant par exemple leur différence avec un seuil prédéterminé, il conclut que l'affichage du système de vision synthétique est incohérent et passe à l'étape 150 suivante.

Dans le cas contraire, le module de traitement 32 exécute les sous-étapes 141 à 143 pour un autre point de contrôle. Lorsqu'aucun de ces points ne démontre une incohérence de l'affichage, le module de traitement 32 passe par exemple à nouveau à l'exécution de l'étape 120.

Lors de l'étape 150, le module de traitement 32 du système de sécurisation 10 lève une alerte signalant un affichage incohérent du système d'affichage synthétique 12 et modifie par exemple cet affichage sur l'écran PFD pour un affichage bidimensionnel classique.

On conçoit alors que la présente invention présente un certain nombre d'avantages.

En effet, l'invention permet de sécuriser le fonctionnement d'un système de vision synthétique d'un aéronef. L'invention permet alors de rendre ce fonctionnement compatible avec les exigences de criticité aéronautiques.

En particulier, lorsque l'affichage d'un tel système de vision synthétique devient incohérent, l'invention permet de lever une alerte et remplacer éventuellement cet affichage incohérent par un affichage fiable.

Ainsi, le pilote se repérera à l'affichage fiable ce qui permettra d'éviter des actions inappropriées à la situation réelle de l'aéronef.

**Revendications**

1. Procédé de sécurisation du fonctionnement d'un système de vision synthétique (12) d'un aéronef, le système de vision synthétique (12) fournissant un affichage synthétique de l'environnement extérieur de l'aéronef selon un champ de vue, en utilisant des premières règles de projection générées en fonction de premières mesures de la position courante et de l'attitude courante de l'aéronef ;
   le procédé comprenant les étapes suivantes :

   - détermination (120) d'au moins un objet de contrôle dans le champ de vue du système de vision synthétique (12) et pour le ou chaque objet de contrôle, détermination d'au moins un point de contrôle appartenant à cet objet de contrôle, le ou au moins l'un des objets de contrôle correspondant à un objet fictif dans l'environnement extérieur de l'aéronef, l'objet fictif étant un objet défini dans le repère terrestre mais non-présent dans l'environnement extérieur de l'aéronef, le ou chaque objet de contrôle étant fixé dans un repère terrestre ou est défini par rapport à l'aéronef, sur un axe longitudinal de l'aéronef et en avant de celui-ci. ;
- vérification (140) de la cohérence de l'affichage du système de vision synthétique (12), ledit affichage comprenant un tracé du ou de chaque objet de contrôle déterminé en utilisant les premières règles de projection, ladite étape de vérification (140) comprenant les sous-étapes suivantes mises en oeuvre pour au moins un point de contrôle :

+ récupération (141) d'une première position correspondant à la position affichée de ce point de contrôle sur le tracé correspondant sur l'affichage du système de vision synthétique (12) ;
+ détermination (142) d'une deuxième position de ce point de contrôle sur l'affichage du système de vision synthétique (12), en utilisant des deuxièmes règles de projection générées indépendamment des premières règles de projection, les deuxièmes règles de projection étant générées à partir de deuxièmes mesures de la position courante et de l'attitude courante de l'aéronef, les premières mesures et les deuxièmes mesures étant fournies par des capteurs différents (27, 37) et indépendants ;
+ comparaison (143) de la première et de la deuxième positions, l'affichage du système de vision synthétique (12) étant incohérent lorsque la deuxième position diffère de la première position d'au moins un seuil prédéterminé.

**2.** Procédé selon la revendication 1, dans lequel le ou au moins l'un des objets de contrôle correspond à un objet réel dans l'environnement extérieur de l'aéronef et/ou à un objet déjà présent sur l'affichage du système de vision synthétique.

**3.** Procédé selon l'une quelconque des revendications précédentes, dans lequel le ou chaque objet de contrôle présente un point ou un objet tridimensionnel orienté dans l'espace.

**4.** Procédé selon l'une quelconque des revendications précédentes, dans lequel le tracé du ou de chaque objet de contrôle déterminé sur l'affichage du système de vision synthétique (12) est au moins partiellement transparent, de préférence entièrement transparent.

**5.** -Procédé selon l'une quelconque des revendications précédentes, comprenant en outre une étape (150) de changement de l'affichage du système de vision synthétique (12) par un autre affichage lorsque cet affichage du système de vision synthétique (12) est incohérent.

**6.** -Produit programme d'ordinateur comportant des instructions logicielles qui, lorsque mises en oeuvre par un équipement informatique, mettent en oeuvre le procédé selon l'une quelconque des revendications précédentes.

**7.** -Système (10) de sécurisation du fonctionnement d'un système de vision synthétique (12) d'un aéronef, comprenant des moyens techniques configurés pour mettre en oeuvre le procédé selon l'une quelconque des revendications 1 à 5.


**Patentansprüche**

**1.** Verfahren zur Sicherung des Betriebs eines synthetischen Sichtsystems (12) eines Luftfahrzeugs, wobei das synthetische Sichtsystem (12) eine synthetische Anzeige der äußeren Umgebung des Luftfahrzeugs gemäß einem Sichtfeld bereitstellt, indem es erste Projektionsregeln verwendet, die abhängig von ersten Messungen der aktuellen Position und der aktuellen Lage des Luftfahrzeugs erzeugt werden;
das Verfahren umfassend die folgenden Schritte:

- Bestimmen (120) mindestens eines Kontrollobjekts in dem Sichtfeld des Systems für synthetische Sicht (12) und für das oder jedes Kontrollobjekt Bestimmen mindestens eines Kontrollpunkts, der zu diesem Kontrollobjekt gehört, wobei das oder mindestens eines der Kontrollobjekte einem fiktiven Objekt in der äußeren Umgebung des Luftfahrzeugs entspricht, wobei das fiktive Objekt ein Objekt ist, das in dem terrestrischen Koordinatensystem definiert, aber in der äußeren Umgebung des Luftfahrzeugs nicht vorhanden ist, wobei das oder jedes Kontrollobjekt in einem terrestrischen Koordinatensystem fixiert ist oder in Bezug auf das Luftfahrzeug auf einer Längsachse des Luftfahrzeugs und vor diesem definiert ist;
- Überprüfen (140) der Kohärenz der Anzeige des Systems für synthetische Sicht (12), die Anzeige umfassend einen Verlauf des oder jedes Kontrollobjekts, der unter Verwendung der ersten Projektionsregeln bestimmt wird, der Überprüfungsschritt (140) umfassend die folgenden Unterschritte, die für mindestens einen Kontrollpunkt implementiert werden:

+ Abrufen (141) einer ersten Position, die der angezeigten Position dieses Kontrollpunkts auf dem entsprechenden Verlauf auf der Anzeige des Systems für synthetische Sicht (12) entspricht;
+ Bestimmen (142) einer zweiten Position dieses Kontrollpunkts auf der Anzeige des Systems für synthetische Sicht (12) unter Verwendung von zweiten Projektionsregeln, die unabhängig von den ersten Projektionsregeln erzeugt werden, wobei die zweiten Projektionsregeln anhand zweiter Messungen der aktuellen Position und der aktuellen Lage des Flugzeugs erzeugt werden, wobei die ersten Messungen und die zweiten Messungen von verschiedenen und unabhängigen Sensoren (27, 37) bereitgestellt werden;
+ Vergleichen (143) der ersten und der zweiten Position, wobei die Anzeige des Systems für synthetische Sicht (12) inkohärent ist, wenn die zweite Position um mindestens einen vorbestimmten Schwellenwert von der ersten Position abweicht.

2. Verfahren nach Anspruch 1, wobei das oder mindestens eines der Kontrollobjekte einem tatsächlichen Objekt in der äußeren Umgebung des Flugzeugs und/oder einem Objekt entspricht, das bereits auf der Anzeige des Systems für synthetische Sicht vorhanden ist.

3. Verfahren nach einem der vorherigen Ansprüche, wobei das oder jedes Kontrollobjekt einen dreidimensionalen, räumlich orientierten Punkt oder ein dreidimensionales Objekt aufweist.

4. Verfahren nach einem der vorherigen Ansprüche, wobei der Verlauf des oder jedes bestimmten Kontrollobjekts auf der Anzeige des Systems für synthetische Sicht (12) zumindest teilweise transparent, vorzugsweise vollständig transparent ist.

5. Verfahren nach einem der vorherigen Ansprüche, ferner umfassend einen Schritt (150) zum Ändern der Anzeige des Systems für synthetische Sicht (12) durch eine andere Anzeige umfasst, wenn diese Anzeige des Systems für synthetische Sicht (12) inkohärent ist.

6. Computerprogrammprodukt, umfassend Softwareanweisungen, die, wenn sie von einer Rechenvorrichtung implementiert werden, das Verfahren nach einem der vorherigen Ansprüche implementieren.

7. System (10) zur Sicherung des Betriebs eines Systems für synthetische Sicht (12) eines Flugzeugs, umfassend technische Einrichtungen, die konfiguriert sind, um das Verfahren nach einem der Ansprüche 1 bis 5 zu implementieren.

**Claims**

1. A method for securing the operation of a synthetic vision system (12) of an aircraft, the synthetic vision system (12) providing a synthetic display of the outside environment of the aircraft according to a field of view, using first projection rules generated as a function of first measurements of the current position and the current attitude of the aircraft; the method comprising the following steps:

- determining (120) at least one control object in the field of view of the synthetic vision system (12) and for the or each control object, determining at least one control point belonging to that control object, the or at least one of the control objects corresponding to a fictitious object in the outside environment of the aircraft, the fictitious object being an object defined in the terrestrial reference frame but not present in the external environment of the aircraft, the or each control object being fixed in an earth-based coordinate system or is defined relative to the aircraft, on a longitudinal axis of the aircraft and in front of the latter;
- verifying (140) the coherence of the display of the synthetic vision system (12), said display comprising an outline of the or each determined control object by using the first projection rules, said verification step (140) comprising the following sub-steps carried out for at least one control point:

+ recovering (141) a first position corresponding to the displayed position of this control point on the corresponding outline of the display of the synthetic vision system (12);
+ determining (142) a second position of this control point on the display of the synthetic vision system (12), by using second projection rules generated independently of the first projection rules, the second projection rules being generated from second measurements of the current position and the current attitude of the aircraft, the first measurements and the second measurements being provided by different and independent sensors (27, 37);

+ comparing (143) the first and second positions, the display of the synthetic vision system (12) being inconsistent when the second position differs from the first position by at least a predetermined threshold.

2. The method according to claim 1, wherein the or at least one of the control objects corresponds to a real object in the outside environment of the aircraft and/or to an object already present on the display of the synthetic vision system.

3. The method according to any one of the preceding claims, wherein the or each control object presents a point or a three-dimensional object oriented in space.

4. The method according to any one of the preceding claims, wherein the outline of the or each control object determined on the display of the synthetic vision system (12) is at least partially transparent, preferably entirely transparent.

5. The method according to any one of the preceding claims, further comprising a step (150) for changing the display of the synthetic vision system (12) by another display when this display of the synthetic vision system (12) is inconsistent.

6. A computer program product comprising software instructions which, when implemented by a computer equipment, carry out the method according to any one of the preceding claims.

7. A system (10) for securing the operation of a synthetic vision system (12) of an aircraft, comprising technical means configured to carry out the method according to any one of claims 1 to 5.

**FIG.1**

FIG.2

LastStep

C4, C8   C1, C5

P ✕

ProjDist

AC

C3, C7   C2, C6

LongStep

## FIG.3

Altstep

C8  C7   C5  C6
✕   ✕    ✕   ✕

P ✕

ProjDist

AC

✕   ✕    ✕   ✕
C4  C3   C1  C2

A

## FIG.4

$P_2$

$P_1$

C9

AC

A

**FIG.5**

**EP 3 578 926 B1**

**RÉFÉRENCES CITÉES DANS LA DESCRIPTION**

**Documents brevets cités dans la description**

- WO 2018009109 A1
- US 9733349 B1

- FR 3033903 A1